# EUROPÄISCHE PATENTSCHRIFT

(11) **EP 0 824 976 B1**
(45) Veröffentlichungstag und Bekanntmachung des Hinweises auf die Patenterteilung: **02.01.2003**
(21) Anmeldenummer: 97114253.4
(22) Anmeldetag: 19.08.1997
(51) Int. Cl.: B21C 37/08, B21C 37/083

(54) **Verfahren zur Herstellung von dünnwandigen Rohren**
Method for the production of thin-walled tubes
Procédé pour la fabrication de tubes à parois minces

(30) Priorität: 20.08.1996 DE 19633423
(43) Veröffentlichungstag der Anmeldung: 25.02.1998
(73) Patentinhaber: RHEINZINK GMBH, 45711 Datteln (DE)
(72) Erfinder: Dyllus, Frank-Ulrich, 59399 Olfen (DE); Binkowski, Martin, 45711 Datteln (DE); Lachenit, Ulrich, 59399 Olfen (DE); Stradmann, Adolf, 45711 Datteln (DE)
(74) Vertreter: Hoffmeister, Helmut, Dr. Dipl.-Phys.

(56) Entgegenhaltungen:
- EP-A- 0 284 141
- US-A- 2 796 508
- US-A- 5 344 062

## Beschreibung

Die Erfindung betrifft ein Verfahren zur Herstellung von dünnwandigen Rohren mit durch Widerstandsschweißen hergestellter Längsnaht, insbesondere von Regenfallrohren mit einem Durchmesser von 50 bis 200 mm und einer Wanddicke von 0,50 bis 1,50 mm, aus Band, vorzugsweise aus Endlosband, bestehend aus Zink oder Zinkknetlegierung, vorzugsweise aus Zink-Kupfer-Titan-Legierung, gemäß DIN 17770,das zu einem mit einem in Längsrichtung verlaufenden Längsschlitz versehenen Profil gerundet wird, wobei die den Längsschlitz begrenzenden zerspanend bearbeiteten Längsränder in einer vergleichsweise kurzen Zone auf Schweißtemperatur erwärmt, unter Bildung eines V-förmigen Spalts zur Schweißzone hin zusammengeführt und durch Stauchen stumpf miteinander verschweißt werden.

Durch ein solches Verfahren, das in der EP-B-0 284 141 beschrieben ist, können aus einem aus Zink oder Zinkknetlegierung bestehenden Band längsnahtgeschweißte dünnwandige Rohre automatisch und kontinuierlich mit großer Geschwindigkeit von bis zu 200 m/min hergestellt werden. Die Festigkeit der Schweißnaht erreicht die gleichen Werte wie der Bandwerkstoff selbst bei gleichzeitig sehr guter Dehnung, so daß eine Dehnung von bis 30 % möglich und damit die Enden der Rohre problemlos im Hinblick auf ihre Steckbarkeit aufweitbar sind.

Um eine einwandfreie Schweißnaht zu erhalten, ist es notwendig, die Stirnflächen der Längsränder des Bandes vor dem Runden durch Walzprofilieren spanend zu bearbeiten, so daß diese sich bei gerundetem Profil im Stauch-Schweiß-Bereich der Rohrfertigungsanlage ohne Schwierigkeiten gegenüberstellen lassen. Durch die Zerspanung wird auch die Oxidhaut beseitigt, die sich während der Lagerung des Bandes gebildet hat. Diese Maßnahmen vermeiden unregelmäßiges Wärmeeinbringen, Energieverluste, einseitige Gratbildung, punktuelle Überhitzung mit starkem Aufschmelzen des Bandwerkstoffs, Kantenversatz sowie ein Überlappen der Längsränder.

Es ist die Aufgabe der vorliegenden Erfindung, die Festigkeit der Schweißnaht der auf die vorstehend beschriebenen Weise hergestellten Rohre deutlich, d.h. um 50 bis 100 % zu verbessern.

Diese Aufgabe wird durch ein Verfahren mit den Merkmalen des Anspruchs 1 gelöst.

Der Winkel des V-förmigen Spaltes, unter dem die Längsränder des vorgerundeten Profils zur Schweißzone hin zusammengeführt werden, ist durch die Verformungseigenschaften des Bandes begrenzt. Die Längsränder werden vor dem Schweißen praktisch aus der durch die Rundung bedingten Neigung gegeneinander geführt und dann miteinander verschweißt.

Bei der Erwärmung der Längsränder in einer vergleichsweise kurzen Schweißzone ist darauf zu achten, daß die angegebene Schweißtemperatur nicht überschritten wird, da es sonst zur Ausbildung einer Schweißnaht kommt, deren Güte den mechanisch-technologischen Anforderungen nicht entspricht.

Zweckmäßigerweise wird die Schweißnaht wenigstens auf der Außenseite des Rohres durch Hobeln geglättet.

Die Festigkeit der Schweißnaht kann auch durch eingeschlossenes Zinkoxid, das sich an den Stirnflächen der Längsränder des Profils beim Rundungsvorgang bildet, nicht unbeachtlich beeinträchtigt werden. Da die Längsränder des vorgerundeten Profils auf den Schmelzpunkt oder darüber erwärmt werden, lösen sich die eine Schmelztemperatur von ca. 1975°C aufweisenden Zinkoxide nicht auf und verbleiben als die Festigkeit der Schweißnaht negativ beeinflussende Einschlüsse in der Schweißnaht. Aus diesem Grunde ist es angebracht, die Längsränder erst unmittelbar vor dem Schweißen spanend zu bearbeiten.

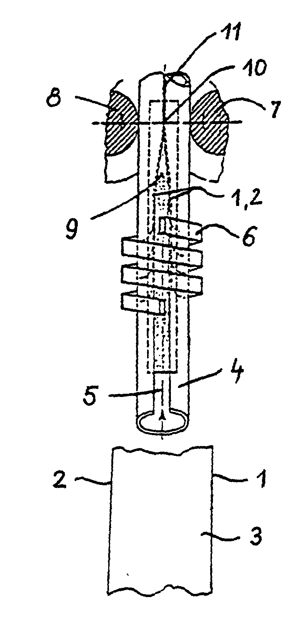

Das erfindungsgemäße Verfahren ist in der Zeichnung, die einen Querschnitt senkrecht zu den Achsen der Stauchrollen mit einer Draufsicht auf einen im Erwärmungs-Stauch-Schweiß-Bereich der Rohrfertigungsanlage befindlichen Rohrabschnitt zeigt, beispielhaft dargestellt und wird nachstehend erläutert.

Die Längsränder (1,2) eines 0,65 mm dicken und 297 mm breiten Endlosbandes (3) aus Zink-Kupfer-Titan-Legierung gemäß DIN 17770 mit der Kennzeichnung D-Znbd (D=dauerstandfest, Zn=Zink, bd=bandgewalzt) sind durch nicht dargestellte Hobelstähle am gerundeten Profil (4) spanend bearbeitet, so daß sie frei von Zinkoxid sind. Das Endlosband (3) wird dann durch eine aus sechs horizontalen Biegewalzenpaaren mit jeweils einem nachgeordneten vertikalen Seitenrollenpaar und durch zwei anschließende horizontale Führungsrollenpaare bestehende, nicht dargestellte Walzprofilierstrecke geführt, in der das Endlosband (3) zu einem gerundeten Profil (4) mit einem nach oben offenen, beidseitig der Symmetrieebene verlaufenden Längsschlitz (5) geformt wird. Die Längsränder (1, 2) des gerundeten Profils (4) werden im Bereich der Führungsrollenpaare einander gegenübergestellt. Daran anschließend wird das Profil (4) durch den Spuleninduktor (6) geführt und dabei ein 8 mm langer Abschnitt der Längsränder (1, 2) auf eine Temperatur von 420°C erwärmt. Anschließend läuft das Profil (4) durch ein vertikales Stauchrollenpaar (7, 8), zwischen denen die Längsränder (1, 2) unter Bildung eines V-förmigen Schlitzes (9) unter einem Winkel von 6° in der Schweißzone (10) zusammengeführt und durch Stauchen verschweißt werden. Um ein Aufspringen der noch nicht abgekühlten Schweißnaht (11) zu vermeiden, ist unmittelbar nach dem vertikalen Stauchrollenpaar (7, 8) ein nicht dargestelltes vertikales Seitenrollenpaar angebracht. Anschließend wird der geschweißte Rohrabschnitt kalibriert und dann die Schweißnaht geprüft. Der Kalibriereinrichtung ist eine nicht dargestellte Trennvorrichtung nachgeordnet, mittels der von dem Rohrstrang einzelne Rohre gewünschter Länge abgelängt werden.

## Patentansprüche

1. Verfahren zur Herstellung von dünnwandigen Rohren mit durch Widerstandschweißen hergestellter Längsnaht (11), insbesondere von Regenfallrohren mit einem Durchmesser von 50 bis 200 mm und einer Wanddicke von 0,50 bis 1,50 mm aus Band (3), bestehend aus Zink oder Zinkknetlegierung, wie Zink-Kupfer-Titan-Legierung, welches Band zu einem mit einem in Längsrichtung verlaufenden Längsschlitz (5) versehenen Profil (4) gerundet wird, wobei die den Längsschlitz begrenzenden, spanend bearbeiteten Längsränder (1, 2) in einer vergleichsweise kurzen Zone auf Schweißtemperatur erwärmt, unter Bildung eines V-förmigen Spaltes (9), der einen Winkel zwischen 2 bis 10° einschließt, zur Schweißzone hin zusammengeführt und durch Stauchen stumpf miteinander verschweißt werden,
**dadurch gekennzeichnet, dass**
die Längsränder (1, 2) am vorgerundeten Rohrprofil (4) erst unmittelbar vor dem Schweißen spanend bearbeitet und auf einer Länge von 2 bis 20 mm auf eine Temperatur von 418°C bis 440°C erwärmt werden.

2. Verfahren nach Anspruch 1, **dadurch gekennzeichnet, dass** die Längsränder im Bereich der Schweißzone mit Schutzgas beaufschlagt werden.

3. Verfahren nach Anspruch 1, **dadurch gekennzeichnet, dass** die Längsränder auf eine Länge von 5 bis 10 mm erwärmt werden.

## Claims

1. A process for the production of thin-walled tubes with a longitudinal seam (11) produced by resistance welding, particularly downpipes having a diameter of 50 to 200 mm and a wall thickness of 0.50 to 1.50 mm, from strip (3) consisting of zinc or zinc wrought alloy, such as zinc-copper-titanium alloy, which strip is rounded into a profile (4) provided with a longitudinal slot (5) extending in the longitudinal direction, wherein the machined longitudinal edges (1, 2) defining the longitudinal slot are heated to welding temperature in a comparatively short zone, with the formation of a V-shaped gap (9), which includes an angle of between 2 and 10°, are brought together towards the welding zone and, by upsetting, are butt welded to one another,
**characterised in that**
the longitudinal edges (1, 2) at the pre-rounded tubular profile (4) are first machined directly before welding and heated to a temperature of 418°C to 440°C over a length of 2 to 20 mm.

2. A process according to claim 1, **characterised in that** the longitudinal edges are subjected to a protective gas in the region of the welding zone.

3. A process according to claim 1, **characterised in that** the longitudinal edges are heated over a length of 5 to 10 mm.

## Revendications

1. Procédé de fabrication de tubes à parois minces à soudure longitudinale (11) réalisée par soudure par résistance, en particulier de tuyaux de descente d'un diamètre de 50 à 200 mm et d'une épaisseur de paroi de 0,50 à 1,50 mm en partant d'une bande (3) qui se compose de zinc ou d'un alliage corroyé de zinc comme un alliage zinc - cuivre - titane, bande qui est arrondie en un profil (4) comportant une fente longitudinale (5) qui s'étend en direction longitudinale, dans lequel les bords longitudinaux (1,2) qui limitent la fente longitudinale et sont usinés par enlèvement de copeaux sont chauffés à une température de soudure dans une sone relativement courte en formant un interstice (9) en forme de V qui inclut un angle de 2 à 10 °, sont réunis dans la zone de soudure et sont soudés l'un à l'autre par compression bord à bord,
**caractérisé en ce que**
les bords longitudinaux (1, 2) ne sont usinés par enlèvement de copeaux sur le profil tubulaire arrondi (4) qu'immédiatement avant la soudure et sont alors chauffés sur une longueur de 2 à 20 mm à une température de 418 °C à 440 °C.

2. Procédé selon la revendication 1, **caractérisé en ce qu'**un gaz de protection est appliqué sur les bords longitudinaux dans la zone de soudure.

3. Procédé selon la revendication 1, **caractérisé en ce que** les bords longitudinaux sont chauffés sur une longueur de 5 à 10 mm.
